# EUROPÄISCHE PATENTSCHRIFT

(11) **EP 1 155 539 B1**
(45) Veröffentlichungstag und Bekanntmachung des Hinweises auf die Patenterteilung: **13.10.2004**
(21) Anmeldenummer: 00909011.9
(22) Anmeldetag: 08.02.2000
(51) Int. Cl.: H04L 12/64, H04L 12/28

(54) **VERFAHREN ZUR VERBINDUNGSORIENTIERTEN ÜBERTRAGUNG VON DATENPAKETEN**
METHOD FOR THE CONNECTION-ORIENTED TRANSMISSION OF DATA PACKETS
PROCEDE PERMETTANT DE TRANSMETTRE DES PAQUETS DE DONNEES EN FONCTION DES CONNEXIONS

(30) Priorität: 19.02.1999 DE 19907019
(43) Veröffentlichungstag der Anmeldung: 21.11.2001
(73) Patentinhaber: ROBERT BOSCH GMBH, 70442 Stuttgart (DE)
(72) Erfinder: VOLLMER, Vasco, D-29471 Gartow (DE); RADIMIRSCH, Markus, D-30880 Laatzen (DE); SEIDEL, Guenter, D-47669 Wachtendonk (DE)
(86) Internationale Anmeldenummer: PCT/DE2000/000374
(87) Internationale Veröffentlichungsnummer: WO 2000/049777

(56) Entgegenhaltungen:
- EP-A- 0 510 290
- RAYCHAUDHURI D ET AL: "WATMNET: A PROTOTYPE WIRELESS ATM SYSTEM FOR MULTIMEDIA PERSONAL COMMUNICATION" IEEE INTERNATIONAL CONFERENCE ON COMMUNICATIONS (ICC),US,NEW YORK, IEEE, 23. Juni 1996 (1996-06-23), Seiten 469-477, XP000625717 ISBN: 0-7803-3251-2
- P NARASIMHAN ET AL: "Design and Iplementation of Radio Access Protocols in Wireless ATM Networks" PROCEEDINGS URSI INTERNATIONAL SYMPOSIUM ON SIGNALS SYSTEMS AND ELECTRONICS, 2. September 1998 (1998-09-02), XP002131307
- ANASTASI G ET AL: "MAC PROTOCOLS FOR WIDEBAND WIRELESS LOCAL ACCESS: EVOLUTION TOWARD WIRELESS ATM" IEEE PERSONAL COMMUNICATIONS,US,IEEE COMMUNICATIONS SOCIETY, Bd. 5, Nr. 5, 1. Oktober 1998 (1998-10-01), Seiten 53-64, XP000786617 ISSN: 1070-9916

## Beschreibung

### Stand der Technik

Die Erfindung geht aus von einem Verfahren zur Übertragung von Datenpaketen in einem Kommunikationssystem in rahmenorientierter Form zwischen einer Zentrale und einer Vielzahl von Teilnehmern, wobei zwischen der Zentrale und den Teilnehmern Nutzdatenpakete und Steuerdatenpakete ausgetauscht werden.

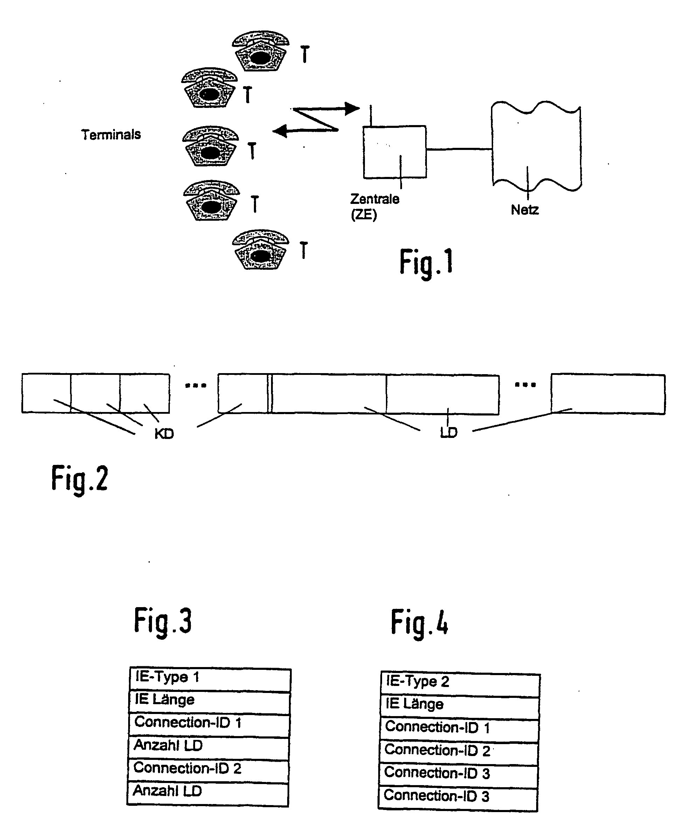

In zentral gesteuerten Kommunikationsnetzen, beispielsweise im zentral gesteuerten zellularen Funknetz gemäß dem ETSI-Projekt HYPERLAN Typ 2 ist eine zentrale Einheit ZE vorgesehen, an die mehrere Terminals angeschlossen werden können (vgl. Figur 1). Dieses Funknetz arbeitet verbindungsorientiert, daß heißt, bevor Daten mit anderen Teilnehmern bzw. deren Terminals, die an das Netz oder die Zentrale ZE angeschlossen sind, ausgetauscht werden können, muß mindestens eine Verbindung aufgebaut werden. Den Terminals wird die von ihnen benötigte Datenrate auf dem gemeinsam genutzten Medium von der Zentrale aufgrund von Anforderungen der Teilnehmer zugewiesen. Es ist für ein Terminal eines Teilnehmern möglich, mehr als eine aktive virtuelle Verbindung gleichzeitig zu haben, wie dies bei ATM der Fall ist. In einer Realisierungsform dieses Netzes werden sowohl die Ressourcen-Anforderung (Ressource-Request) der Terminals, als auch die Ressourcen-Zuweisungen der Zentrale ZE (Ressource-Grants) pro Verbindung durchgeführt, daß heißt das Terminal überträgt für jedes seiner Verbindungen die Menge der Datenpakete, die übertragen werden müssen. Als Ressource gilt hier die Bereitstellung von Datenraten auf dem Medium, währenddessen Daten übertragen werden können. Dementsprechend sendet die Zentrale ZE für jede Verbindung des Terminals T eine Ressourcen-Zuweisung. Bei der Ressourcen-Zuweisung pro Verbindung ist die zugehörigkeit eines gesendeten Datenpaketes zu einer Verbindung explizit durch die Zuweisung der Zentrale 2E gegeben, diese Information ist also bereits in der Zentrale 2E vorhanden und muß deshalb nicht zusätzlich vom Terminal übertragen werden.

Im vorgenannten Funknetz sind zwei verschiedene Datenpaketgrößen für die zu übertragenden Daten vorgesehen. Dabei dienen kurze Pakete (ca. 6 Byte; kurzer Datencontainer: KD) der Übertragung von Steuerungsinformationen, das heißt Informationen, die nicht Nutzdaten sind, sondern dazu dienen, daß Netzwerk zu steuern und zu verwalten, also beispielsweise Verbindungen zu etablieren, Terminals zu assoziieren, Handover durchzuführen oder falsch empfange Datenpakete noch einmal anzufordern. Lange Datencontainer LD haben eine Länge von ca. 54 Byte und dienen im Normalfall dazu Nutzdaten zu übertragen. Zusätzlich zu den reinen Nutzdaten sind noch einige weitere Informationen enthalten, die in sehr engem Zusammenhang mit den Nutzdaten stehen, z.B. sequenznummer oder eine Prüfsumme zur Fehlererkennung.

Eine Aussendung sowohl im Downlink (zentrale in Richtung Teilnehmer) - als auch in Uplink - Richtung (Terminal in Richtung Zentrale), besteht aus einer Anzahl von Steuerdatenpaketen KD am Anfang und einer darauf folgenden Anzahl von Nutzdatenpaketen LD gemäß Figur 2. Die genaue Anzahl der Steuerdatenpakete KD und Nutzdatenpakete LD wird von der Zentrale ZE in der Ressourcen-Zuweisung festgelegt.

Ein derartiges Verfahren ist z.B. aus der Veröffentlichung Anastasi G. et al "MAC Protocols for Wideband Wireless Local Access Evolution Toward Wireless ATM", IEEE Personal Communication Bd. S, 1. Oktober 1998, Seiten 53-64, bekannt.

Aus der Veröffentlichung Raychaudhuri D. et al "WATM net: A prototype wireless ATM system for multimedia personal communication", IEFE International Conference on Communications (ICC), US, New York, IEFE, 23. Juni 1996 (1996-06-23), Seiten 469-477 ist ein Verfahren zur Übertragung in einem Kommunikationssystem in rahmenorientierter Form zwischen einer Zentrale und einer Vielzahl von Teilnehmern bekannt. Es werden dort Nutz- und Steuerdatenpakete ausgetauscht. Zur verbindungsorientierten Übertragung ist im Header einer Datenzelle eine Kennung untergebracht.

### Vorteile der Erfindung

Die Maßnahmen gemäß des Anspruchs 1 ermöglichen insbesondere bei einer Ressourcen-Zuweisung pro Teilnehmer bzw. dessen Terminal der Zentrale eine Vorabinformation zu geben, zu welcher Verbindung des Teilnehmers bzw. Terminals ein empfangenes Datenpaket gehört. Ebenso gilt dies für eine Ressourcen-Anforderung, bzw. -Zuweisung pro Verkehrsklasse, wie sie in [1] ausführlich und in [2] in wesentlichen Punkten beschrieben ist ([1]: Kapitel 8.2, DynPara-PDU [2]: Kapitel 4).

Durch die Unterbringung der Kennung im Übertragungsrahmen, die angibt zu welcher Verbindung vom Teilnehmer übermittelte Container für Nutzdatenpakete gehören, ist eine eindeutige Identifizierung von Datenpaketen möglich, die selbst keine Angaben über die Verbindung enthalten.

Die Kennung läßt sich vorteilhaft in bereits vorhandenen Steuerdatenpaketen unterbringen. Auf diese Weise ergibt sich eine flexible Methode, die zudem ohne Veränderung derzeit bestehender Datenformate auskommt. Die Kennung kann auch auf mehrere Steuerdatenpakete aufgeteilt werden.

Wenn durch eine Vereinbarung zwischen Zentrale und Teilnehmern gemäss des Verfahrens von Anspruch 1 Container für Nutzdatenpakete jeweils mit einer Mehrzahl von Steuerdatenpaketen gefüllt werden, läßt sich das erfindungsgemäße Verfahren leicht integrieren. Dadurch ergibt sich eine flexible Datenstruktur, die in bestehende oder künftige Übertragungsstandards leicht integriert werden kann.

Das erfindungsgemäße Verfahren ist insbesondere in einem Kommunikationssystem vorteilhaft, bei dem

Übertragungsressourcen pro Teilnehmer zugewiesen werden und der Teilnehmer bzw. dessen Terminal die Nutzdatenpakete verschiedener Verbindungen selbst auswählt.

Der Einsatz des Verfahrens nach der Erfindung ist insbesondere dann sinnvoll, wenn ein Terminal eine hohe Zahl von Verbindungen hält.

### Zeichnungen

Anhand der weiteren Zeichnungen werden Ausführungsbeispiele der Erfindung näher erläutert. Es zeigen
Figur 3 und 4 den Aufbau von Informationselementen,
Figur 5 die Zuweisung von Containern für Nutzdatenpakete für ein Terminal,
Figur 6 bis 13 die Formate weiterer Informationselemente,
Figur 14 das Auffüllen von Containern für Nutzdatenpakete mit Steuerdatenpaketen.

### Beschreibung von Ausführungsbeispielen

Im eingangs erwähnten HYPERLAN Type 2 Kommunikationsnetz existieren zwei verschiedene Sorten Datencontainer unterschiedlicher Kapazität. Datenpakete mit einer Länge von ca. 6 Byte enthalten in der Regel Steuerinformationen. Sie werden nachfolgend als Steuerdatenpakete KD bezeichnet. Datenpakete mit einer Länge von ca. 54 Byte, das heißt mit einer Datenkapazität von einem Vielfachen vorgenannter Datenpakete, enthalten neben den Nutzdaten nur ein kurzes Kopffeld, in dem unmittelbar zum Containerinhalt gehörende Daten stehen, wie z.B. Sequenznummer und
Fehlerkorrekturbits. Diese Datenpakete werden nachfolgend als Nutzdatenpakete LD bezeichnet. Die Nutzdatenpakete LD und die Steuerdatenpakete KD werden zwischen einer Zentrale ZE und den Teilnehmer-Terminals T ausgetauscht, wobei eine rahmenorientierte Übertragung eingesetzt wird (Figur 1).

Ein Terminal fordert eine bestimmte Anzahl von Nutzdatenpaketen LD und eine bestimmte Anzahl von Steuerdatenpaketen KD von der Zentrale ZE an. Eventuell können auch nur Nutzdatenpakete LD angefordert werden und die Steuerdatenpakete KD dann automatisch von der Zentrale ZE bereitgestellt werden. Diese Anforderung geschieht aufgrund von internen Berechnungen des Terminals über die benötigte Kapazität. Realisierbar ist statt dessen auch eine Anforderung pro Verbindung oder pro Verbindungsklassse. Entscheidend für das vorgestellte Verfahren ist lediglich, daß in der Zentrale ZE die Information fehlt, zu welcher virtuellen Verbindung ein Nutzdatenpaket LD gehört, das von dem Terminal gesendet wird. Diese Information wird beim erfindungsgemäßen Verfahren mittels einer Kennung CID (Connection-ID) in einem Informationselement IE übertragen. Dieses Informationselement IE wird, da es sich um eine Steuerungsinformation handelt, vorteilhafterweise in einem Steuerdatenpaket KD innerhalb des Übertragungsrahmens untergebracht.

Diese Informationselemente IE enthalten die Information über die zu einem Nutzdatenpaket LD gehörende Verbindung in Form einer Verbindungskennummer CID (Connection ID), diese ID existiert bereits im HYPERLAN Type 2 System. Neben der Connection-ID muß die Anzahl der Nutzdatenpakete LD für diese Verbindung übertragen werden. Eine andere Lösung die ersatzweise oder gleichzeitig eingesetzt werden kann, ist die Übertragung der Connection-ID für jedes Nutzdatenpaket LD, das folgt, das heißt wenn zu einer Verbindung mehrere Nutzdatenpakete LD gehören, wird die Connection-ID mehrmals gesendet. Die zweite Möglichkeit bietet sich insbesondere für Verbindungen mit zwei oder weniger Nutzdatenpaketen LD an, da hier das Feld für die Anzahl der Nutzdatenpakete LD eingespart werden kann. Für die Realisierung ist es besonders vorteilhaft, wenn beide Möglichkeiten verfügbar sind und vom Terminal entweder zu einem bestimmten Zeitpunkt eine Möglichkeit fest ausgewählt wird, oder das Terminal sich von Fall zu Fall die jeweils günstigste Methode aussucht, also diejenige die am wenigsten Daten erzeugt. Die beiden Informationselemente IE haben dann einen prinzipiellen Aufbau wie in den Figuren 3 und 4 gezeigt ist. Die Unterscheidung zwischen den beiden Arten von Informationselementen kann bspw. durch unterschiedliche Kennungen für das Informationselement IE (IE-Type) vorzugsweise im Kopffeld geschehen. Es ist aber auch möglich, die gleiche Kennung mit einem zusätzlichen Unterscheidungsbit zu verwenden.

Im folgenden Ausführungsbeispiel werden einige Parameter so verwendet, daß sie dem aktuellen Stand des HYPERLAN Type 2 Kommunikationsnetzes entsprechen. Es werden dabei zwei Verfahren beschrieben. Das erste Verfahren enthält in dem Informationselement IE jeweils zwei Felder für jede aktive virtuelle Verbindung. Das erste Feld nimmt dabei den Identifier der Verbindung (Connection-ID) auf, das zweite Feld die Anzahl der für diese Verbindung folgenden Nutzdatenpakete LD. Das zweite Verfahren verwendet dagegen nur Felder mit Connection-IDs. Hier wird für jeden der folgenden Nutzdatenpakete LD die zugehörige Connection-ID gesendet, das heißt wenn für eine Verbindung zwei Nutzdatenpakete LD übertragen werden, zeigt die Liste auch zweimal die gleiche Connection-ID.

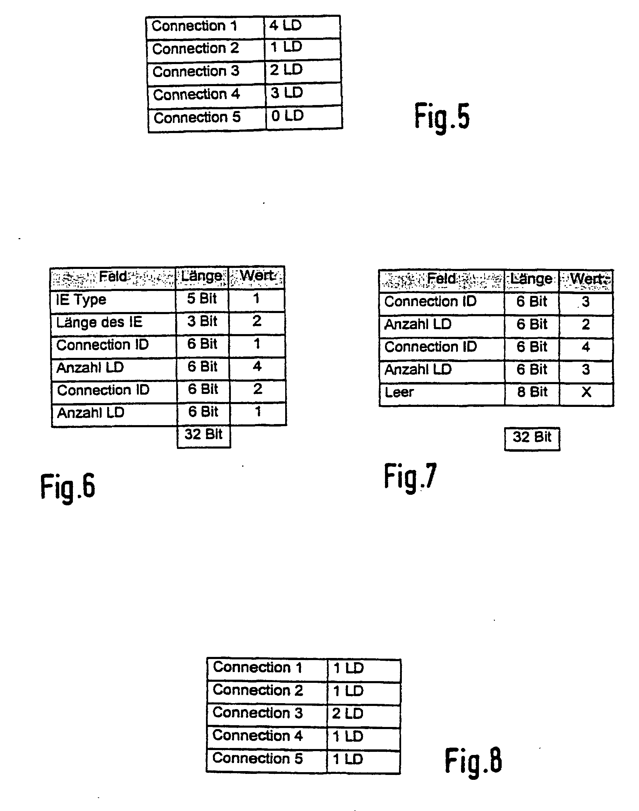

Gegeben ist für dieses Beispiel ein zentral gesteuertes Kommunikationsnetz mit einem oder mehreren angeschlossenen Terminals wie in Figur 1 gezeigt. Für dieses Beispiel wird jetzt ein Terminal angenommen, das 5 virtuelle Verbindungen über die Zentrale ZE mit dem Netz hat (Connection-IDs 1 bis 5). Für diese Verbindungen sendet das Terminal eine Datenratenanforderung für alle Verbindungen. Aufgrund dieser Anforderung teilt die Zentrale ZE dem Terminal eine bestimmte Datenmenge zu. Diese zugewiesene Kapazität kann vom Terminal jetzt frei verwendet werden. Angenommen werden 10 zugewiesene Nutzdatenpakete LD für das Terminal. Diese werden vom Terminal gemäß Figur 5 verteilt.

Als kleinste Einheit für ein Steuerdatenpaket KD werden hier 32 Bit angenommen, aus diesem Grund sollten auch die Informationselemente IE eine Granularität von 32 Bit haben, um sie effizient in den Container für Steuerdatenpakete KD zu packen. Auf die oben genannten 6 Byte wird an dieser Stelle verzichtet, da in den verbleibenden 2 Byte nur noch der Fehlerschutz CRC liegt, der für diese Betrachtungen nicht von Belang ist. Für die Länge der Connection-ID werden 6 Bit angenommen, für das Feld mit der Anzahl der Nutzdatenpakete LD ebenfalls 6 Bit. Daraus ergibt sich das in Figur 6 bzw. Figur 7 gezeigte Bild für die Informationselemente nach dem ersten Verfahren, das heißt für jede Verbindung, für die Daten übertragen werden, wird sowohl die Connection-ID als auch die Anzahl der Nutzdatenpakete LD übertragen. Das Feld ID-Type mit dem Wert 1 bedeutet dabei, daß Felder, wie zuvor gezeigt, belegt sind. Die Länge des Informationselements IE gibt an, wieviele der 32 Bit-Einheiten verwendet werden (hier = 2).

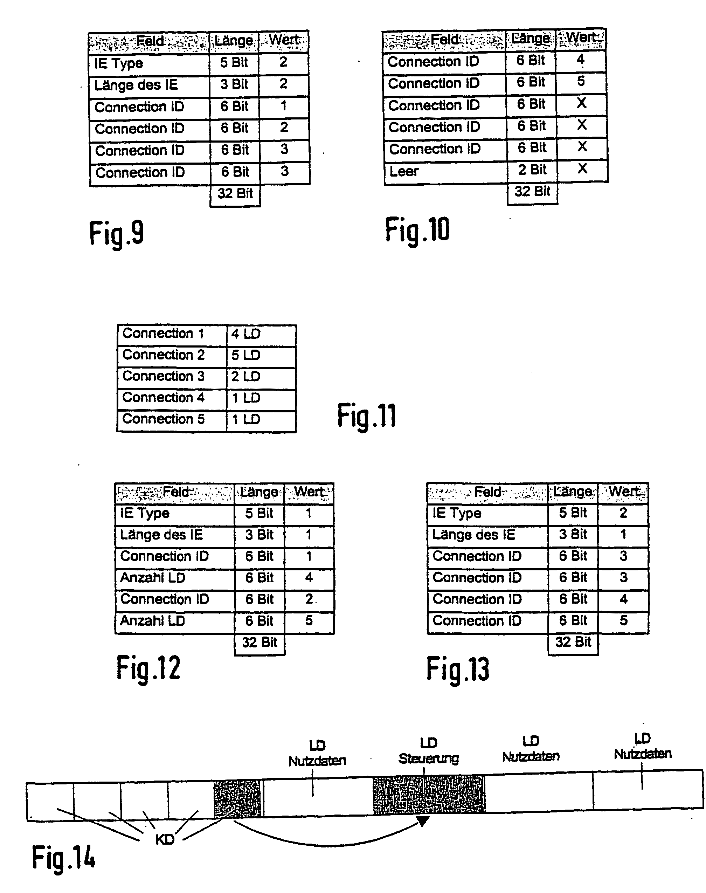

Das Beispiel nach dem zweiten Verfahren verwendet die gleichen grundsätzlichen Parameter jedoch mit nur 6 zugewiesenen Nutzdatenpakete LD, die vom Terminal gemäß Figur 8 verteilt werden. Daraus ergibt sich für das gesamte Informationselement die Anordnung gemäß den Figuren 9 und 10. Das IE-Type Feld mit dem Wert = 2 kennzeichnet die nutzdatenpaketweise Kennzeichnung. Zu sehen ist, daß hier gegenüber dem ersten Verfahren eine effizientere Umsetzung der Informationsübertragung stattfindet, wenn nur wenige Nutzdatenpakete LD pro Verbindung existieren.

Eine Kombination der beiden Verfahren ist durch den Beginn eines neuen Informationselements möglich, das dann das jeweils andere Verfahren verwendet. Dazu wird als Beispiel von der in Figur 11 aufgezeigten Verteilung von Nutzdatenpaketen LD ausgegangen. Diese insgesamt 13 Nutzdatenpakete LD lassen sich am effizientesten wie in den Figuren 12 und 13 dargestellt, adressieren. Eine weitere Möglichkeit ist es, ein zusätzliches kurzes Feld einzufügen, das jeweils für zwei 6-Bit-Felder festlegt, ob diese für eine Connection-ID und ein Feld für die Anzahl der Nutzdatenpakete LD (erstes Verfahren) oder für zwei Connection-IDs (zweites Verfahren) verwendet werden.

Insbesondere für den Fall, daß ein Teilnehmer bzw. dessen Terminal T dringende Steuerinformationen übertragen möchte, wird dem Terminal T erfindungsgemäß die Möglichkeit gegeben einen Container für Nutzdatenpakete LD mit einer Mehrzahl von Steuerdatenpaketen KD zu füllen. Dazu muß allerdings in einem Steuerdatenpaket die Information über den Inhalt eines nachfolgenden Containers für Nutzdaten untergebracht sein. Außerdem muß eine Information enthalten sein, welche der nachfolgenden Container für Nutzdatenpakete gemeint sind Dies ist in Figur 14 durch einen Pfeil dargestellt: Im Übertragungsrahmen wird ein Container für Nutzdatenpakete LD mit neun Steuerdatenpaketen KD gefüllt. Dazu muß der Zentrale ZE allerdings bekannt sein, daß es sich um einen normalen Container mit Nutzdaten handelt. Zu diesem Zweck wird erfindungsgemäß zwischen Zentrale ZE und einem Teilnehmer T eine Vereinbarung getroffen, daß Container für Nutzdatenpakete LD mit Steuerdatenpaketen KD gefüllt werden, die zusammen übermittelt werden und festgelegt, welche Container für Nutzdatenpakete LD mit Steuerdatenpaketen KD gefüllt werden, die zusammen übermittelt werden und festgelegt, welche Container für Nutzdatenpakete im Übertragungsrahmen jeweils mit Steuerdatenpaketen KD gefüllt werden. Dabei gibt es unterschiedliche Wege diese Vereinbarung zu treffen:
1. ein Terminal kündigt dies in einem vorhergehenden Steuerdatenpaket KD an. Dieses Vorgehen setzt ein Auswerten von Steuerdatenpaketen KD vor der Auswertung von Nutzdatenpaketen LD voraus,
2. durch Ankündigung des Modus im Kopffeld eines Nutzdatenpaketa LD,
3. durch Übermitteln einer Anforderung durch ein Terminal T an die Zentrale ZE einen Container für Nutzdatenpakete mit Steuerdatenpaketen füllen zu können,
4. durch Festlegen einer festen Vereinbarung, daß ab einer bestimmten Anzahl von Anforderungen von Steuerdatenpaketen KD durch ein Terminal T statt dessen ein Container für Nutzdatenpakete LD zum Auffüllen mit Steuerdatenpaketen KD von der Zentrale ZE zugewiesen wird.

Jene Steuerdatenpakete KD, die in Containern für Nutzdatenpakete LD untergebracht werden, sind vorzugsweise in einem Unterrahmen zusammengefaßt, welcher in seinem äußeren Format an das Format eines Nutzdatenpaketes LD angepaßt ist, selbst wenn die Anzahl der aktuell zu übertragenden Steuerdatenpakete KD nicht ausreichend ist den Container vollständig zu füllen.

Eine detaillierte Beschreibung für das Auffüllen der Container für Nutzdatenpakete LD durch Steuerdatenpakete KD ist in der WO 00/49770 beschrieben.

### Literatur:

1. D. Petras, "Entwicklung und Leistungsbewertung einer ATM-Funkschnittstelle", Dissertation an der RWTH Aachen, Aachen 1998
2. D. Petras, U. Vornefeld, "Joint Performance of DSA++MAC Protocol for wireless ATM under realistic traffic and channel models" wmATM'98, Hangzhou, China 1998

## Patentansprüche

1. Verfahren zur Übertragung von Datenpaketen in einem Kommunikationssystem in rahmenorientierter Form zwischen einer Zentrale (ZE) und einer Vielzahl von Teilnehmern (T), wobei zwischen der Zentrale (ZE) und den Teilnehmern (T) Nutzdatenpakete (LD) und Steuerdatenpakete (KD) ausgetauscht werden, wobei Nutzdatenpakete oder Steuerdatenpakete jeweils in Containern innerhalb eines Übertragungsrahmens untergebracht sind, wobei für eine verbindungsorientierte Übertragung im Übertragungsrahmen eine Kennung (CID) in einem Informationselement (IE) innerhalb eines Steuerdatenpaketes (KD) untergebracht wird, die angibt, zu welcher Verbindung ein oder mehrere nachfolgende Container für Nutzdatenpakete (LD) gehört/gehören, der/die von einem Teilnehmer (T) zur Zentrale (ZE) übermittelt wird/werden,
dadurch charakterisiert, dass eine Vereinbanrung zwischen Teilnehmer (T) und Zentrale (ZE) getroffen wird, dass Container für Nutzdatenpakete (LD) mit Steuerdatenpaketen gefüllt werden, die zusammen übermittelt werden und anhand einer Information in einem Steuerdatenpaket über den Inhalt eines nachfolgenden Containers für Nutzdaten festgelegt wird, welche Container für Nutzdatenpakete im Übertragungsrahmen jeweils mit Steuerdatenpaketen (KD) gefüllt werden.

2. Verfahren nach Anspruch 1, **dadurch gekennzeichnet, daß** die Kennung (CID) in mindestens einem der Steuerdarenpakete (KD) untergebracht wird.

3. Verfahren nach Anspruch 1 oder 2, **dadurch gekennzeichnet, daß** die Kennung (CID) in einem Informationselement (IE) übertragen wird, welches zumindest Verbindungskennungen für nachfolgende Container für Nutzdatenpakete (LD) einer Verbindung enthält.

4. Verfahren nach Anspruch 3, **dadurch gekennzeichnet, daß** das Informationselement (IE) in zwei Arten von Feldern für jede aktive insbesondere virtuelle Verbindung unterteilt wird und zwar in ein erstes Feld für Verbindungskennungen (CID) und in ein zweites Feld für die Anzahl der für die jeweilige Verbindung folgenden Container für Nutzdatenpakete (LD).

5. Verfahren nach Anspruch 3, **dadurch gekennzeichnet, daß** im Informationselement (IE) keine Felder für die Anzahl der Container für Nutzdatenpakete (LD) untergebracht werden, dafür aber zu jedem Container für Nutzdatenpakete (LD) eine Verbindungskennung (CID) im Informationselement (IE) vorgesehen wird.

6. verfahren nach einem der Ansprüche 4 oder 5, **dadurch gekennzeichnet, daß** im Informationselement (IE) die Art der enthaltenen Felder vorzugsweise im Kopf des Informationselements (ID) signalisiert wird.

7. Verfahren nach einem der Ansprüche 3 bis 6, **dadurch gekennzeichnet, daß** im Informationselement (IE) ein Feld vorgesehen wird, welches die Länge des Informationsfeldes (IE) angibt.

8. Verfahren nach einem der Ansprüche 3 bis 7, **dadurch gekennzeichnet, daß** im Informationselement (IE) ein Feld vorgesehen wird, welches jeweils für zwei für verbindungekennungen oder für die Anzahl der Container für Nutzdatenpakete (LD) vorgesehene Felder festlegt, ob diese für eine Verbindungskennung und die Anzahl der Container für Nutzdatenpakete (LD) vorgesehen sind oder ausschließlich für Verbindungskennungen verwendet werden.

9. verfahren nach einem der Ansprüche 1 bis 8, **dadurch gekennzeichnet, daß** durch eine Verbindung zwischen Zentrale (ZE) und Teilnehmer (T) festgelegt wird, ob im Übertragungsrahmen Container für Nutzdatenpakete (LD) jeweils mit einer Mehrzahl von Steuerdatenpaketen (KD) gefüllt werden.

10. Verfahren nach einem der Ansprüche 1 bis 9, **gekennzeichnet durch** die Verwendung in einem Kommunikationssystem mit Zuweisung der Übertragungsressourcen pro Teilnehmer bzw. dessen Terminal (T) und Auswahlmöglichkeit der Nutzdatenpakete (LD) verschiedener Verbindungen **durch** den Teilnehmer bzw. dessen Terminal (T).

## Claims

1. Method for transmitting data packets in a communication system in frame-oriented form between a control centre (ZE) and a multiplicity of subscribers (T), where user data packets (LD) and control data packets (KD) are interchanged between the control centre (ZE) and the subscribers (T), where user data packets or control data packets are respectively accommodated in containers within a transmission frame, where an identifier (CID) is accommodated in an information element (IE) within a control data packet (KD) for the purpose of connection-oriented transmission in the transmission frame, said identifier indicating that connection with which one or more subsequent containers for user data packets (LD) is/are associated which is/are transmitted from a subscriber (T) to the control centre (ZE),
**characterized in that** an agreement is made between the subscriber (T) and the control centre (ZE) to the effect that containers for user data packets (LD) are filled with control data packets which are transmitted together, and an information item in a control data packet relating to the content of a subsequent container for user data is used to stipulate which containers for user data packets are respectively filled with control data packets (KD) in the transmission frame.

2. Method according to Claim 1, **characterized in that** the identifier (CID) is accommodated in at least one of the control data packets (KD).

3. Method according to Claim 1 or 2, **characterized in that** the identifier (CID) is transmitted in an information element (IE) which contains at least connection identifiers for subsequent containers for user data packets (LD) associated with a connection.

4. Method according to Claim 3, **characterized in that** the information element (IE) is divided into two types of fields for each active, in particular virtual, connection, specifically into a first field for connection identifiers (CID) and a second field for the number of containers for user data packets (LD) which follow for the respective connection.

5. Method according to Claim 3, **characterized in that** the information element (IE) accommodates no fields for the number of containers for user data packets (LD), but instead a connection identifier (CID) is provided in the information element (IE) for each container for user data packets (LD).

6. Method according to either of Claims 4 and 5, **characterized in that** the type of field contained in the information element (IE) is preferably signalled in the header of the information element (ID).

7. Method according to one of Claims 3 to 6, **characterized in that** the information element (IE) is provided with a field which indicates the length of the information field (IE).

8. Method according to one of Claims 3 to 7, **characterized in that** the information element (IE) is provided with a field which respectively stipulates for two fields provided for connection identifiers or for the number of containers for user data packets (LD) whether these fields are provided for a connection identifier and the number of containers for user data packets (LD) or are used exclusively for connection identifiers.

9. Method according to one of Claims 1 to 8, **characterized in that** a connection between the control centre (ZE) and the subscriber (T) stipulates whether containers for user data packets (LD) are respectively filled with a plurality of control data packets (KD) in the transmission frame.

10. Method according to one of Claims 1 to 9, **characterized by** use in a communication system with allocation of the transmission resources for each subscriber or his terminal (T) and the option for the user data packets (LD) associated with various connections to be selected by the subscriber or his terminal (T).

## Revendications

1. Procédé de transmission de paquets de données dans un système de communication orienté cadre, entre un organe central (ZE) et une quantité d'utilisateurs (T), selon lequel, entre l'organe central (ZE) et les utilisateurs (T), des paquets de données utiles (LD) et des paquets de données de commande (KD) sont échangés, des paquets de données utiles ou des paquets de données de commande étant logés respectivement dans des conteneurs à l'intérieur d'un cadre de transmission, et pour une transmission orientée en liaison dans le cadre de transmission, un identificateur (CID) est logé dans un élément d'information (IE) à l'intérieur d'un paquet de données de commande (KD), qui indique à quelle liaison appartient/appartiennent un ou plusieurs conteneurs consécutifs de paquets de données utiles (LD) qui est/sont transmis par un utilisateur (T) à l'organe central (ZE),
**caractérisé en ce qu'**
une convention est passée entre les utilisateurs (T) et l'organe central (ZE), des conteneurs de paquets de données utiles (LD) sont remplis de paquets de données de commande qui sont transmis ensemble, et au moyen d'une information dans un paquet de données de commande sur le contenu d'un conteneur suivant de données utiles, on détermine quels conteneurs de paquets de données utiles sont remplis respectivement de paquets de données de commande (KD) dans le cadre de transmission.

2. Procédé selon la revendication 1,
**caractérisé en ce que**
l'identificateur (CID) est logé dans au moins un des paquets de données de commande (KD).

3. Procédé selon la revendication 1 ou 2,
**caractérisé en ce que**
l'identificateur (CID) est transmis dans un élément d'information (IE) qui contient au moins des identificateurs de liaison pour des conteneurs suivants de paquets de données utiles (LD) d'une liaison.

4. Procédé selon la revendication 3,
**caractérisé en ce que**
l'élément d'information (IE) est divisé en deux types de champs pour chaque liaison active, en particulier virtuelle, et donc en un premier champ pour des identificateurs de liaison (CID) et en un second champ pour la quantité de conteneurs de paquets de données utiles (LD) suivants pour chaque liaison.

5. Procédé selon la revendication 3,
**caractérisé en ce que**
l'élément d'information (IE) ne comporte aucun champ pour la quantité de conteneurs de paquets de données utiles (LD), mais un identificateur de liaison (CID) est prévu dans l'élément d'information (IE) pour chaque conteneur de paquets de données utiles (LD).

6. Procédé selon l'une des revendications 4 ou 5,
**caractérisé en ce que**
dans l'élément d'information (IE), le type de champs contenus est signalé de préférence en tête de l'élément d'information (ID).

7. Procédé selon l'une des revendications 3 à 6,
**caractérisé en ce que**
dans l'élément d'information (IE), un champ indique la longueur du champ d'information (IE).

8. Procédé selon l'une des revendications 3 à 7,
**caractérisé en ce que**
dans l'élément d'information (IE), un champ détermine respectivement deux champs prévus pour des identificateurs de liaison ou pour la quantité de conteneurs de paquets de données utiles (LD) si ceux-ci sont prévus pour un identificateur de liaison et la quantité de conteneurs de paquets de données utiles (LD) ou sont utilisés exclusivement pour des identificateurs de liaison.

9. Procédé selon l'une des revendications 1 à 8,
**caractérisé en ce que**
par une liaison entre l'organe central (ZE) et l'utilisateur (T), on détermine si dans le cadre de transmission des conteneurs de paquets de données utiles (LD) sont respectivement remplis d'une pluralité de paquets de données de commande (KD).

10. Procédé selon l'une des revendications 1 à 9,
**caractérisé par**
l'utilisation dans un système de communications comprenant une affectation des ressources de transmission par utilisateur, respectivement leur terminal (T), et une possibilité de sélectionner les paquets de données utiles (LD) de différentes liaisons par les utilisateurs, respectivement par leur terminal (T).
